Europäisches Patentamt

European Patent Office

Office européen des brevets

(11) Numéro de publication : **0 021 258**
**B1**

(12) FASCICULE DE BREVET EUROPÉEN

(45) Date de publication du fascicule du brevet :
16.02.83

(51) Int. Cl.³ : **F 16 H 45/02**

(21) Numéro de dépôt : 80103266.5

(22) Date de dépôt : 12.06.80

(54) Dispositif électronique de commande du pontage d'un convertisseur de couple hydrodynamique et procédé de mise en oeuvre.

(30) Priorité : 13.06.79 FR 7915192

(43) Date de publication de la demande :
07.01.81 Bulletin 81/01

(45) Mention de la délivrance du brevet :
16.02.83 Bulletin 83/07

(84) Etats contractants désignés :
BE DE GB IT NL SE

(56) Documents cités :
FR A 2 323 065
FR A 2 375 508

(73) Titulaire : REGIE NATIONALE DES USINES RENAULT
Boite postale 103 8-10 avenue Emile Zola
F-92109 Boulogne-Billancourt (FR)

(72) Inventeur : Chevalier, Claude
Route de Daubrie
F-78760 Jouars-Pontchartrain (FR)
Inventeur : Bouvet, Jean-Marie
133 rue de Silly
F-92100 Boulogne-Billancourt (FR)
Inventeur : Parthuisot, Jean-Pierre
158-166 rue du Lieutenant Colonel de Montbrison
F-92500 Rueil-Malmaison (FR)
Inventeur : Zammarchi, Gino
8 rue des Mûriers
F-75020 Paris (FR)

(74) Mandataire : Casalonga, Alain et al
BUREAU D.A. CASALONGA OFFICE JOSSE & PETIT
Baaderstrasse 12-14
D-8000 München 5 (DE)

## Dispositif électronique de commande du pontage d'un convertisseur de couple hydrodynamique et procédé de mise en œuvre

La présente invention est relative à un dispositif électronique de commande de pontage, permettant le couplage sans glissement entre l'arbre d'entrée et l'arbre de sortie d'un convertisseur de couple hydrodynamique faisant partie d'une transmission automatique pour un groupe motopropulseur, par exemple de véhicule automobile. Le dispositif électronique de commande de l'invention permet d'effectuer le pontage pour tous les rapports de la transmission.

Les transmissions automatiques utilisées dans les véhicules automobiles comprennent un convertisseur hydrocinétique de couple placé entre le moteur d'entraînement du véhicule et la boîte de vitesse. Le rôle essentiel de ce convertisseur de couple est de multiplier le couple d'entrée fourni par le moteur par un certain coefficient pendant une phase transitoire dite phase de conversion de couple. Lorsque cette phase de conversion de couple est terminée, l'influence du convertisseur de couple est en pratique néfaste. En effet, il subsiste entre les éléments tournants d'entrée et de sortie du convertisseur un certain glissement qui diminue le rendement global du groupe motopropulseur et de ce fait augmente sa consommation en carburant.

Pour réduire la consommation du véhicule automobile, il convient donc, dans le cas d'une transmission automatique à convertisseur de couple de ce type, de solidariser les organes d'entrée et de sortie dès la fin de la phase de conversion afin de supprimer le glissement. Cette opération est dite « pontage ».

On a déjà proposé des dispositifs électrohydrauliques permettant d'effectuer le pontage d'un tel convertisseur de couple. Un dispositif bien connu de l'homme de l'art, commercialisé par la Société BORG-WARNER n'effectue cependant le pontage que sur le rapport de vitesse le plus élevé ce qui ne procure qu'un gain de consommation négligeable. Un autre dispositif également bien connu commercialisé par la Société Zahnradfabrik Friedrichshafen (Z. F.) n'effectue le pontage qu'à partir du seul paramètre que constitue la vitesse de sortie du convertisseur, paramètre qui n'est pas suffisamment représentatif du fonctionnement réel du convertisseur. D'autres dispositifs également connus (voir par exemple le brevet français 2 323 065) présentent l'inconvénient que le pondage subiste lors du passage des vitesses ce qui provoque des chocs de fonctionnement et nuit au confort de passage et à la longévité de certains organes de la transmission automatique.

On connaît également par le brevet français 2 375 508, un dispositif de commande électronique d'une transmission de véhicule industriel permettant de sélectionner deux modes de fonctionnement différents. Dans l'un des modes de fonctionnement, le convertisseur reste toujours actif. Dans l'autre mode de fonctionnement, il n'est pas prévu de supprimer le pontage dès le passage d'un rapport de transmission à un autre.

La présente invention a pour objet un dispositif électronique de commande permettant d'effectuer le pontage pour tous les rapports de vitesses de la transmission tout en interrompant transitoirement l'effet du pontage à chaque passage de vitesse.

Par ailleurs, l'invention a pour objet un dispositif permettant la commande du pontage en tenant compte des paramètres réels de fonctionnement du convertisseur qui sont constitués par la vitesse de l'arbre d'entrée ou vitesse du moteur ($V_M$) ainsi que la vitesse de l'arbre de sortie ou vitesse de la turbine ($V_T$), le dispositif électronique de l'invention comparant le rapport de ces vitesses à une valeur prédéterminée correspondant au point de couplage théorique du convertisseur.

La présente invention a également pour objet un procédé de pontage d'un convertisseur de couple hydrodynamique faisant partie d'une transmission automatique à plusieurs rapports de transmission dans lequel le pontage est commandé pour tous les rapports de la transmission dès que le rapport de la vitesse de l'arbre de sortie du convertisseur à la vitesse de l'arbre d'entrée ($V_T/V_M$) est supérieur à une valeur limite correspondant sensiblement au point de couplage du convertisseur. Pour chaque passage d'un rapport de transmission à un autre rapport, le pontage est de préférence supprimé pendant une durée déterminée. De plus, l'ordre de passage du rapport de transmission n'est alors fourni à la transmission automatique qu'à l'expiration de cette durée déterminée.

Selon l'invention, le dispositif électronique de commande du pontage permettant le couplage sans glissement entre l'arbre d'entrée et l'arbre de sortie d'un convertisseur de couple hydrodynamique faisant partie d'une transmission automatique à plusieurs rapports de transmission, comprend un bloc de comparaison des vitesses respectives de l'arbre d'entrée et de l'arbre de sortie du convertisseur par rapport à une valeur déterminée afin de fournir un ordre de commande de pontage. Le dispositif comprend en outre un bloc de temporisation supprimant le pontage pendant le passage d'un rapport de transmission à un autre rapport et transmettant avec retard à la transmission l'ordre de commande du passage d'un rapport de transmission à l'autre.

Dans un mode de réalisation préféré de l'invention, le bloc de temporisation comprend, pour chaque signal de passage de rapport de transmission, un dispositif générant une impulsion de durée déterminée à chaque changement d'état du signal de passage ainsi qu'un moyen de mémorisation recevant le signal de passage et ne le transmettant qu'après l'expiration de la durée déterminée précitée.

Dans un premier mode de réalisation, le bloc de comparaison comprend un convertisseur fréquence/tension pour chacun des signaux représentant respectivement la vitesse de l'arbre d'entrée $V_M$ et la vitesse de l'arbre de sortie $V_T$ du convertisseur, et un comparateur recevant l'intégralité de l'une des tensions obtenues et une fraction de l'autre tension. Le bloc de comparaison fournit ainsi un signal lorsque le rapport des vitesses d'entrée et de sortie $V_T/V_M$ est supérieur à une valeur limite déterminée correspondant au point de couplage du convertisseur.

Dans un autre mode de réalisation préféré donnant une réponse plus rapide, le bloc de comparaison comprend, pour le signal représentant la vitesse de l'arbre d'entrée, un convertisseur fréquence/tension comme précédemment mais pour le signal représentant la vitesse de l'arbre de sortie, un périodemètre recevant en outre un courant issu d'un générateur de courant piloté par le signal de sortie du convertisseur fréquence/tension précité. De cette manière, le bloc de comparaison fournit également un signal de sortie chaque fois que le rapport des vitesses d'entrée et de sortie $V_T/V_M$ est supérieur à ladite valeur prédéterminée.

Le bloc de comparaison peut en outre comprendre avantageusement un circuit de sécurité recevant le signal de tension correspondant à la vitesse de l'arbre d'entrée afin d'interdire le pontage au-dessous d'une limite inférieure de la vitesse de l'arbre d'entrée qui est également la vitesse du moteur.

Le signal de sortie du dispositif électronique de commande de l'invention correspondant à un ordre de pontage pour le convertisseur est fourni par une porte ET logique qui reçoit : les impulsions de durée déterminée issues après inversion, du bloc de temporisation ; le signal issu du périodemètre ou du comparateur des vitesses respectives d'entrée et de sortie ; ainsi qu'éventuellement le signal de sortie inversé du circuit de sécurité. Dans le cas où la transmission automatique comporte par ailleurs un rapport de marche arrière, la porte ET reçoit en outre un signal correspondant à l'état de marche arrière de la transmission de façon à éviter tout pontage dans cette situation.

L'application préférée du dispositif électronique de commande de l'invention, consiste à combiner ce dispositif avec un traducteur électrohydraulique piloté par le dispositif électronique de l'invention et placé dans le circuit d'alimentation hydraulique du convertisseur de couple, en aval de ce dernier, une restriction étant de plus montée en parallèle dudit traducteur. L'ouverture de l'électrovanne du traducteur électrohydraulique provoque une chute de pression dans l'enceinte du convertisseur. Le convertisseur comprend de préférence une vanne hydraulique disposée dans le circuit d'alimentation en fluide hydraulique de l'enceinte du convertisseur et qui est pilotée par la pression régnant dans ladite enceinte de façon à alimenter sélectivement soit l'enceinte du convertisseur, soit une chambre de desserrage d'un piston de commande d'un embrayage susceptible de réaliser le pontage entre l'arbre d'entrée et l'arbre de sortie du convertisseur.

L'invention sera mieux comprise à l'étude de la description détaillée de quelques modes de réalisation pris à titre d'exemples nullement limitatifs et illustrés par les dessins annexés, sur lesquels :

la figure 1 représente un graphique de la variation du coefficient multiplicateur de couple en fonction du rapport vitesse de sortie ou vitesse turbine/vitesse d'entrée ou vitesse moteur d'un convertisseur de couple utilisé dans une transmission automatique ;

la figure 2 représente schématiquement l'ensemble d'un mécanisme de transmission automatique pour véhicule automobile muni d'un dispositif de commande électronique de pontage du convertisseur selon la présente invention ;

la figure 3 montre de manière plus précise les principaux éléments du dispositif électronique de commande de l'invention appliqué à la commande du pontage d'un convertisseur de couple et combiné à un traducteur électrohydraulique de pontage ;

la figure 4 représente schématiquement le bloc de temporisation du dispositif électronique de commande de l'invention ;

la figure 5 représente la forme des signaux apparaissant en divers points du schéma de la fig. 4 ;

la figure 6 représente schématiquement un premier mode de réalisation du bloc de comparaison des vitesses du dispositif électronique de commande de l'invention ;

et la figure 7 représente schématiquement un deuxième mode de réalisation du bloc de comparaison des vitesses du dispositif électronique de commande de l'invention.

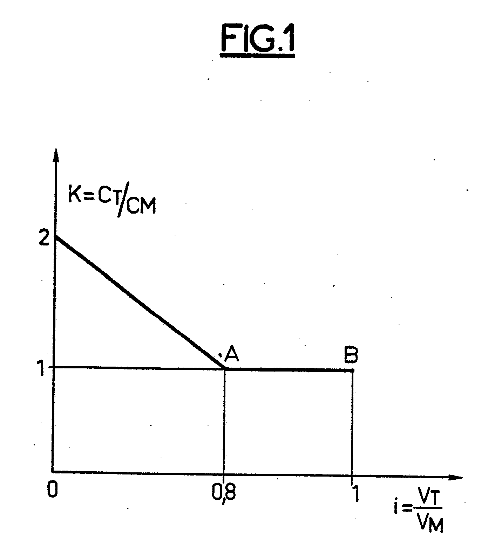

Comme représenté sur la courbe de la fig. 1, le coefficient multiplicateur $K = C_T/C_M$ du couple d'entrée d'un convertisseur hydraulique de transmission automatique de véhicule automobile varie en fonction du rapport $i = V_T/V_M$ de la vitesse de sortie ou vitesse de la turbine à la vitesse d'entrée ou vitesse du moteur. Le coefficient K atteint sa valeur inférieure égale à l'unité au point de couplage théorique A. Il subsiste alors entre l'arbre d'entrée et l'arbre de sortie du convertisseur un glissement représenté par le segment A, B. Lorsque le rapport $i$ reste inférieur à la valeur correspondant au point A c'est-à-dire en pratique à environ 0,8, le convertisseur fonctionne en conversion de couple. Lorsque le rapport $i$ est au contraire compris entre cette valeur approximative de 0,8 et l'unité le convertisseur se trouve en zone de couplage. Le réacteur tourne en même temps que la turbine par l'intermédiaire d'un dispositif de roue libre, le convertisseur se transformant alors en simple coupleur. Il est possible d'améliorer le rendement global de la transmission automatique en supprimant tout glissement au-delà du point de couplage théorique A.

Etant donné qu'il est plus facile par les moyens techniques habituels de mesurer une vitesse de rotation qu'un couple, on utilise de préférence le rapport des vitesses $i$ à la valeur du point de couplage A pour commander le pontage.

Si la vitesse de l'arbre de sortie du convertisseur c'est-à-dire la vitesse de rotation de la turbine est $V_T$ et si la vitesse de rotation de l'arbre d'entrée ou vitesse du moteur est $V_M$, le pontage devra donc se faire lorsque le rapport $i = V_T/V_M$ est supérieur à la valeur limite correspondant au point A soit en pratique environ 0,8. Le dispositif électronique de commande de l'invention est donc adapté pour réaliser la fonction $V_T - i \times V_M > 0$.

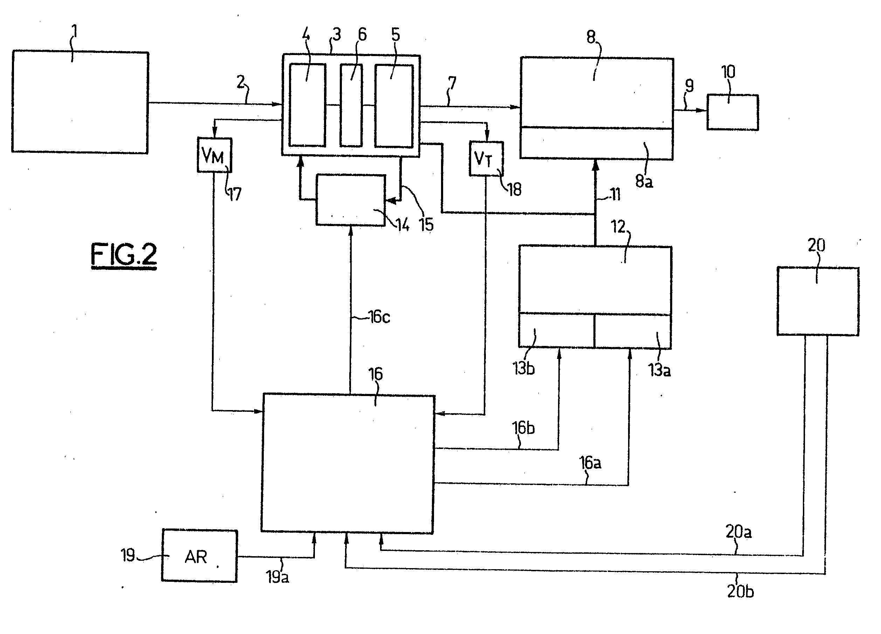

Tel qu'il se trouve représenté sur la fig. 2, l'ensemble de la transmission automatique utilisant le dispositif électronique de commande de l'invention comprend un moteur thermique 1 couplé mécaniquement par un arbre d'entrée 2 à un convertisseur hydrocinétique de couple 3 comprenant un organe d'entrée ou impulseur 4, un organe de sortie ou turbine 5 et un organe central ou réacteur 6. La turbine 5 est elle-même reliée mécaniquement par un arbre de sortie 7 à une transmission automatique 8 comprenant par exemple un train d'engrenages épicycloïdal à plusieurs rapports ainsi que des éléments de friction actionnés hydrauliquement et schématisés par le bloc 8a. La sortie mécanique 9 de la transmission 8 entraîne le véhicule schématisé par le bloc 10.

Les organes de friction hydrauliques 8a sont alimentés en fluide hydraulique sous pression par la conduite 11 reliée à un dispositif hydraulique de puissance 12 comprenant un ensemble de vannes hydrauliques commandées par des traducteurs électrohydrauliques 13a et 13b permettant de sélectionner selon leur état un rapport de vitesse désiré pour la transmission automatique 8.

Un traducteur électrohydraulique 14 alimenté en fluide hydraulique par une conduite 15 est en outre relié à l'enceinte du convertisseur 3. Le traducteur électrohydraulique 14 est commandé par le dispositif électronique de commande de pontage 16 de l'invention. Lorsqu'il est actionné, le traducteur électrohydraulique 14 provoque la solidarisation des éléments d'entrée et de sortie du convertisseur 3 c'est-à-dire de l'impulseur 4 et de la turbine 5, supprimant ainsi tout glissement entre l'arbre d'entrée 2 et l'arbre de sortie 7 du convertisseur.

Le dispositif électronique de commande 16 reçoit dans l'exemple illustré plusieurs paramètres ou informations relatives aux conditions de marche du véhicule automobile. La première de ces informations, fournie par un capteur 17 représente la vitesse de rotation $V_M$ de l'arbre d'entrée 2 ou, ce qui revient au même, de l'élément d'entrée 4 ou impulseur lui-même relié directement au moteur 1. La deuxième information fournie par un capteur 18 représente la vitesse de rotation $V_T$ de l'arbre de sortie 7 du convertisseur ou, ce qui revient au même, la vitesse de rotation de l'organe de sortie ou turbine 5 du convertisseur 3.

La troisième information fournie par un organe 19 coopérant avec le levier de commande manuel de la transmission représente un ordre de commande destiné à placer la transmission dans l'état correspondant au rapport de marche arrière. Enfin, deux autres informations référencées 20a et 20b qui sont des ordres électriques de passage de vitesses sont fournies par un dispositif gouverneur électronique 20 de structure classique.

Après traitement de ces différentes informations d'entrée, le dispositif électronique de commande 16 fournit des ordres électriques de commande 16a et 16b aux traducteurs électrohydrauliques 13a et 13b qui sélectionnent un rapport de vitesse désiré ainsi qu'un ordre électrique de commande 16c au traducteur électrohydraulique de pontage 14. La structure du dispositif électronique de pontage 16 est telle qu'à chaque passage de vitesse commandé par une combinaison particulière des signaux 20a et 20b, il fournisse d'abord un ordre de commande 16c au traducteur électrohydraulique 14 de façon à supprimer le pontage en plaçant le convertisseur en phase de conversion. Ce n'est que lorsque cette opération est terminée que le dispositif électronique de commande 16 transmet aux traducteurs électrohydrauliques 13a et 13b par les signaux 16a et 16b les ordres de passage des vitesses 20a et 20b issus du dispositif électronique 20. Après le passage des vitesses et selon la valeur du rapport $V_T/V_M$ entre la vitesse de sortie déterminée par le capteur 18 et la vitesse d'entrée déterminée par le capteur 17, le dispositif électronique 16 pilote à nouveau le traducteur électrohydraulique 14 afin d'effectuer le pontage en supprimant à nouveau tout glissement entre l'arbre d'entrée et l'arbre de sortie du convertisseur pour le nouveau rapport de la transmission.

On obtient ainsi un pontage effectué en fonction des paramètres réels de fonctionnement du convertisseur pour tous les rapports de vitesse de la transmission automatique 8 avec en outre interruption du pontage au moment du passage des rapports de vitesses.

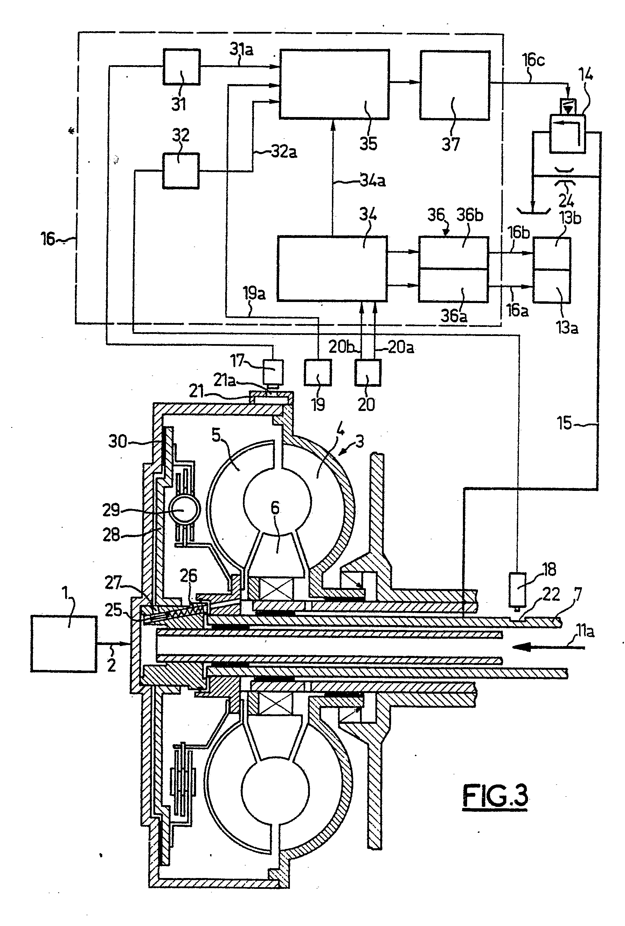

Sur la représentation schématique de la fig. 3 où les éléments déjà décrits portent les mêmes références, on trouve de manière plus précise l'impulseur ou élément d'entrée 4 du convertisseur 3 lié directement au moteur 1 par l'arbre 2. La cloche de l'impulseur 4 présente à sa périphérie une couronne circulaire métallique 21 dans laquelle sont usinées des encoches équidistantes 21a. Ces encoches sont détectées par le capteur magnétique 17 réalisé de façon connue en soi. Le capteur 17 délivre un signal électrique dont la fréquence est donc proportionnelle à la vitesse de l'arbre d'entrée 2 ou vitesse moteur $V_M$. L'organe de sortie du convertisseur ou turbine 5 est lié à l'arbre de sortie 7 comportant sur sa périphérie des encoches équidistantes 22 qui sont détectées par le capteur magnétique 18 réalisé de façon connue en soi et qui peut être analogue au capteur 17. Le capteur 18 délivre donc un signal électrique dont la fréquence est proportionnelle à la vitesse de rotation de l'arbre de sortie 7 ou vitesse turbine $V_T$.

L'alimentation en fluide hydraulique du convertisseur 3 se fait par la canalisation 11a dans l'axe de l'arbre de transmission central. Le traducteur électrohydraulique 14 monté dans le circuit d'alimentation en fluide hydraulique du convertisseur 3 en aval de ce dernier, assure en phase de conversion lorsqu'il est ouvert et en association avec une restriction 24 disposée en parallèle du transducteur 14 un débit important dans la canalisation 15 ce qui entraîne un niveau de pression faible dans l'enceinte du convertisseur 3. L'équilibre statique durant cette phase de conversion est tel que le tiroir mobile 25 d'une vanne hydraulique montée dans le moyeu du convertisseur 3 comprime son ressort de rappel 26 et libère ainsi un orifice calibré 27. La pression du fluide hydraulique d'alimentation qui s'écoule alors par l'orifice 27 s'exerce sur la face arrière du piston de commande 28 créant un effort permettant de déplacer ledit piston de commande 28. La portion périphérique du piston 28 qui comporte une garniture 30 se trouve alors désaccouplée de la cloche de l'impulseur 4. Le pontage qui était précédemment réalisé entre l'impulseur 4 et la turbine 5 par l'intermédiaire de l'organe 29 d'amortissement des vibrations en torsion se trouve donc supprimé.

En phase de pontage le traducteur électrohydraulique 14 est au contraire fermé de sorte que c'est la restriction 24 qui définit à elle seule un faible débit dans la canalisation 15. Le niveau de pression dans l'enceinte fermée du convertisseur 3 atteint un niveau haut. L'équilibre statique de l'ensemble constitué par le tiroir 25 et le ressort 26 est alors tel que le tiroir 25 vient obturer l'orifice calibré 27. La haute pression du fluide dans l'enceinte du convertisseur 3 provoque un effort de serrage du piston 28 par l'intermédiaire de la garniture 30 solidarisant ainsi l'impulseur 4 lié au moteur 1 à la turbine 5 liée à l'arbre de sortie 7. Dans cette position, le glissement entre l'organe d'entrée 4 et l'organe de sortie 5 du convertisseur est supprimé : il y a donc pontage.

Sur la fig. 3 on a représenté également les principaux éléments du dispositif électronique de commande 16. Le dispositif électronique 16 comprend deux blocs de traitement identiques référencés 31 et 32 réalisant de façon connue en soi la mise en forme des signaux provenant respectivement du capteur vitesse moteur 17 et du capteur vitesse turbine 18. Les signaux 31a et 32a issus des blocs 31 et 32 sont des signaux rectangulaires dont la fréquence est proportionnelle respectivement à la vitesse de rotation $V_M$ de l'arbre d'entrée et à la vitesse de rotation $V_T$ de l'arbre de sortie du convertisseur 3. Le bloc de temporisation 34 est destiné, à partir des ordres électriques de passage de vitesse 20a, 20b à supprimer le pontage au moyen du signal de dépontage 34a lors du passage des vitesses et à transmettre les ordres de passage avec un certain retard aux traducteurs électrohydrauliques 13a et 13b par l'intermédiaire d'un circuit d'interface de commande référencé 36 dans son ensemble et comprenant deux blocs identiques 36a et 36b.

Le bloc 35 de comparaison des vitesses est un circuit électronique destiné à comparer le rapport vitesses turbine/vitesse moteur au coefficient $i$ représentatif du point de couplage théorique A de la fig. 1. Le bloc de comparaison 35 fournit un ordre de pontage 16c au traducteur électrohydraulique 14 par l'intermédiaire d'un circuit d'interface de puissance 37.

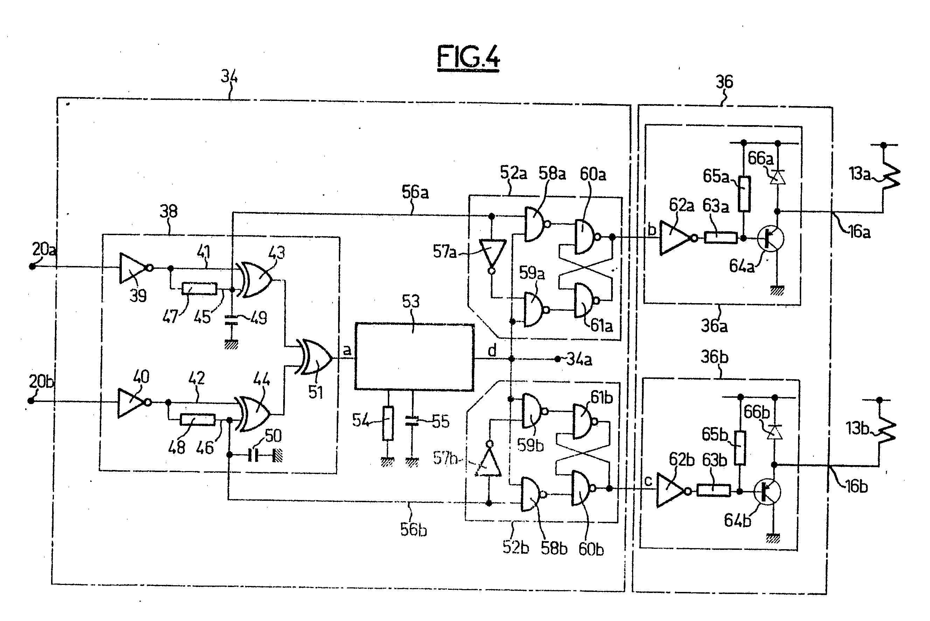

Sur la fig. 4 se trouvent représentés schématiquement les éléments essentiels du bloc de temporisation 34 ainsi que du circuit d'interface de commande 36.

Le bloc de temporisation 34 a une double fonction. D'une part, il provoque un ordre de dépontage sur la borne 34a chaque fois qu'un ordre électrique de changement de rapport apparaît par le changement d'état de l'un des signaux 20a ou 20b. D'autre part, il retarde la transmission de cet ordre électrique de changement de rapport 20a ou 20b aux traducteurs électrohydrauliques 13a et 13b. Chaque changement de rapport de vitesse montant ou descendant est donc précédé d'un ordre de dépontage.

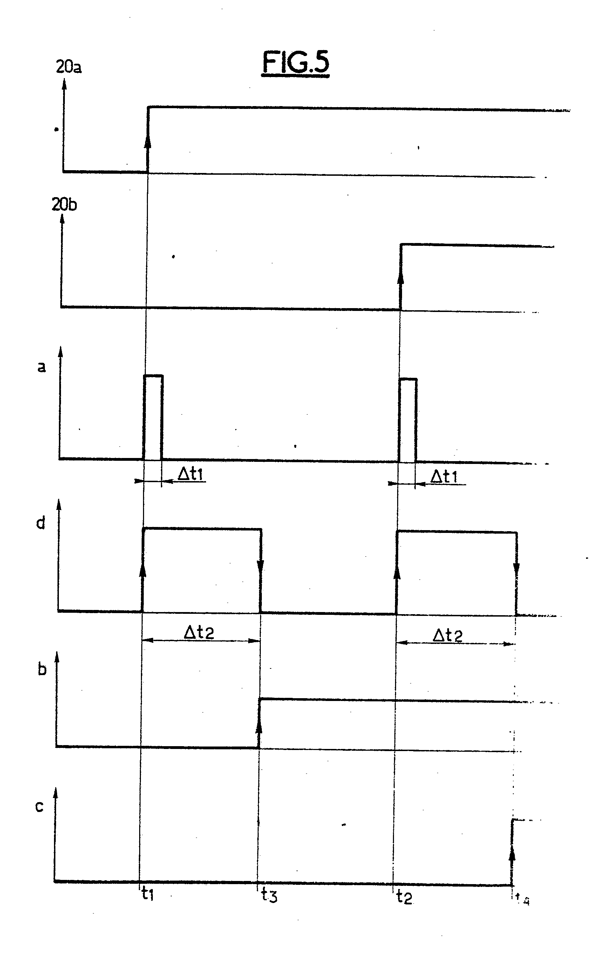

Les ordres électriques de passage des vitesses 20a et 20b présentent des niveaux logiques dont la combinaison permet dans l'exemple illustré d'obtenir trois rapports de marche avant. Pour le premier rapport de vitesses, les deux signaux sont au niveau bas « zéro » comme représenté sur la fig. 5 jusqu'au temps $t_1$. Pour le deuxième rapport de vitesse, le signal 20a est au niveau haut tandis que le signal 20b est au niveau bas comme représenté entre $t_1$ et $t_2$. Pour le troisième rapport de vitesse, les deux signaux sont au niveau haut comme représenté après $t_2$. Le changement d'état au temps $t_1$ représente un ordre électrique de passage du premier rapport de la transmission au deuxième rapport. Le changement d'état au temps $t_2$ représente un ordre électrique de passage du deuxième rapport de la transmission au troisième rapport.

Le circuit 38 qui reçoit les signaux 20a et 20b émet un signal de sortie $a$ visible sur la fig. 5 qui permet de transformer chaque transition de niveau logique de l'un des signaux 20a et 20b en une impulsion de commande de durée. Chaque signal 20a, 20b est reçu sur un amplificateur inverseur 39, 40. Le signal de sortie de cet amplificateur est appliqué à l'une des entrées 41, 42 d'une porte logique 43, 44 réalisant la fonction « OU exclusif ». La deuxième entrée 45, 46 desdites portes logiques 43 et 44 reçoit également le signal de sortie de l'amplificateur inverseur 39, 40 mais avec un temps de retard réalisé au moyen du montage des résistances 45, 48 et des condensateurs 49, 50 reliés à la masse. Les deux signaux de sortie des portes logiques respectives 43 et 44 sont appliqués aux deux entrées d'une porte logique 51 réalisant également la fonction « OU exclusif » et fournissant le signal de sortie $a$.

Grâce à ce montage, on voit qu'à chaque changement d'état du niveau bas au niveau haut de l'un des signaux 20a ou 20b, les deux entrées de l'une des portes logiques 43 ou 44 se trouvent, à un état différent pendant une courte durée $\Delta t_1$

qui dépend de la valeur des résistances 47, 48 et des condensateurs 49, 50. Pendant cette durée, les deux entrées de la porte logique 51 se trouvent donc également à un état différent de sorte que cette dernière émet une impulsion de sortie de durée $\Delta t_1$ dont le front de montée correspond exactement au changement d'état de l'un des signaux 20a ou 20b, comme on peut le voir sur le chronogramme de la fig. 5.

Les signaux appliqués aux deuxièmes entrées 45 et 46 des deux portes logiques 43 et 44 aux points intermédiaires entre les résistances 47, 48 et les condensateurs 49, 50 sont également appliqués par les connexions 56a et 56b à l'entrée de deux mémoires 52a et 52b.

Le signal de sortie a de la porte logique 51 commande un étage monostable 53 qui délivre en 34a une impulsion de durée $\Delta t_2$ définie par la valeur de la résistance 54 et du condensateur 55 qui font partie des éléments de type classique du circuit monostable 53 (signal d sur la fig. 5).

Les mémoires 52a et 52b sont identiques et l'on décrira simplement les éléments constitutifs de la mémoire 52a, les éléments identiques de la mémoire 52b portant sur la fig. 4 les mêmes références affectées d'un indice b. Le signal d'entrée 20a est appliqué à la mémoire 52a par la connexion 56a. Ce signal est introduit dans un amplificateur inverseur 57a ainsi que dans la première entrée d'une porte logique 58a réalisant la fonction NON ET, dont la deuxième entrée reçoit l'impulsion de sortie d issue du circuit monostable 53. Une deuxième porte logique 59a réalisant également la fonction NON ET reçoit sur sa première entrée la sortie de l'amplificateur inverseur 57a et sur sa deuxième entrée l'impulsion d. La sortie de la porte logique 58a alimente la première entrée d'une troisième porte logique 60a réalisant également la fonction NON ET, dont la deuxième entrée est reliée à la sortie d'une quatrième porte logique 61a réalisant également la fonction NON ET. La quatrième porte logique 61a reçoit sur sa première entrée la sortie de la troisième porte logique 60a et sur sa deuxième entrée la sortie de la deuxième porte logique 59a.

Dans ces conditions, on voit que le passage d'un état bas à un état haut du signal 20a ne provoque tout d'abord aucun changement de l'état du signal de sortie b de la mémoire 52a, l'impulsion d apparaissant dès le passage à la sortie du circuit monostable 53 bloquant en effet le changement d'état du signal b. Par contre à l'expiration de la durée $\Delta t_2$, le signal b change d'état au temps $t_3$ comme on peut le voir sur la fig. 5.

Il en est de même pour la mémoire 52b dont le signal de sortie c change d'état au temps $t_4$ à l'expiration de la durée de temporisation $\Delta t_2$.

En définitive, par ce montage, on voit sur la fig. 5 que le front de transition des signaux 20a ou 20b aux temps respectifs $t_1$ et $t_2$ correspondant à un ordre électrique de passage de vitesse se trouve transmis avec une temporisation $t_2$ aux interfaces de puissance 36a et 36b.

Les circuits de puissance 36a et 36b sont identiques et de structure classique. Sur la fig. 5, ils portent les mêmes références affectées de l'indice a ou de l'indice b. Le signal de sortie b de la mémoire 52a est appliqué à l'entrée du circuit 36a à un amplificateur inverseur 62a. La sortie de cet amplificateur est reliée par l'intermédiaire de la résistance 63a à la base du transistor de puissance 64a de type PNP comportant une résistance de charge 65a et dont le collecteur est relié à la masse du montage. L'émetteur du transistor de puissance 64a relié à la tension d'alimentation par la diode de protection 66a alimente par la connexion 16a la bobine de l'électrovanne du traducteur électrohydraulique 13a. Le signal de sortie C de la mémoire 52b est de même appliqué, après avoir traversé le circuit de puissance 36b à l'électrovanne du traducteur électrohydraulique 13b.

Grâce aux différents éléments des blocs 34 et 36, chaque séquence de passage des vitesses comprend donc tout d'abord un ordre de passage au temps $t_1$ ou $t_2$ entraînant immédiatement par la connexion 34a un ordre de dépontage. Puis après une durée transitoire $\Delta t_2$, le passage de la vitesse se fait aux temps respectifs $t_3$ ou $t_4$. Une nouvelle opération de pontage peut alors être effectuée, le signal d étant revenu au niveau bas.

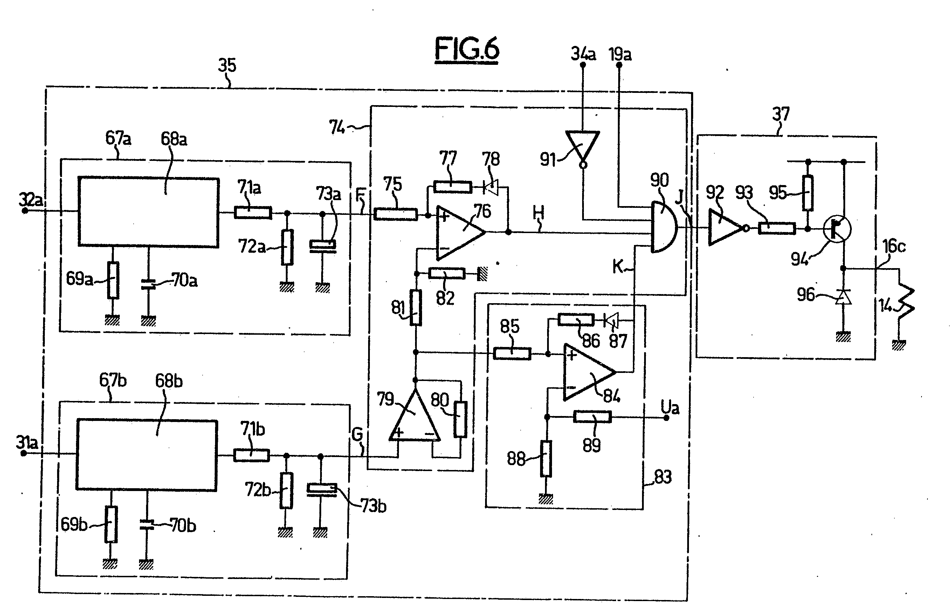

La fig. 6 illustre une première variante du bloc de comparaison 35. Les signaux rectangulaires 31a et 32a correspondant respectivement à la vitesse de rotation de l'arbre d'entrée et de l'arbre de sortie sont introduits dans le bloc de comparaison 35 et alimentent respectivement deux convertisseurs fréquence/tension 67a et 67b de structure identique et portant les mêmes références affectées respectivement de l'indice a ou de l'indice b. Les deux convertisseurs 67a et 67b ont pour objet de convertir chaque signal de vitesse en une tension continue F, G porportionnelle à la fréquence des signaux d'entrée 31a, 32a. Le convertisseur fréquence/tension 67a comprend un circuit monostable 68a fournissant une impulsion, dont la durée est calibrée par la résistance 69a et le condensateur 70a, chaque fois qu'une transition positive est présente sur son entrée. Une intégration de ces impulsions par les résistances 71a, 72a et le condensateur 73a fournit la tension continue recherchée F. De la même manière, le convertisseur 67b fournit la tension continue G.

Ces tensions alimentent l'entrée du module 74 qui a pour fonction de fournir à sa sortie J un ordre de pontage lorsque le rapport des vitesses $V_T/V_M$ est supérieur ou égal à la valeur limite i correspondant au point de couplage A de la fig. 1. Dans ce but, le signal de tension F correspondant à la vitesse de rotation $V_T$ de l'arbre de sortie du convertisseur est intégralement appliqué par l'intermédiaire de la résistance 75 à l'entrée positive d'un comparateur 76 comportant dans sa boucle de réaction une résistance 77 et une diode 78 permettant d'apporter une légère hystérésis favorisant la stabilité de fonctionnement et permettant de ne pas tenir compte d'éventuels parasites. L'entrée négative du comparateur 76 reçoit une fraction $i$ de la tension G par l'intermédiaire d'un étage tampon comprenant un amplificateur 79 muni d'une résistance de contre-réaction 80 et d'un pont diviseur de tension constitué par les résistances 81 et 82 qui définissent la valeur du coefficient $i$.

La sortie H du comparateur 76 passe donc à l'état haut lorsque le potentiel présent sur l'entrée positive du comparateur 76 est légèrement supérieur à celui qui est présent sur l'entrée négative ce qui correspond à une situation dans laquelle le rapport des vitesses $V_T/V_M$ est supérieur au coefficient $i$.

Le bloc de comparaison 35 comprend en outre un circuit de sécurité 83 permettant d'interdire tout pontage au-dessous d'une certaine valeur limite de la vitesse de rotation $V_M$ de l'arbre d'entrée ou vitesse du moteur. Ce circuit de sécurité comprend un comparateur 84 recevant sur son entrée positive par l'intermédiaire de la résistance 85, la tension issue de l'amplificateur 79 correspondant à la vitesse de rotation de l'arbre d'entrée $V_M$. Dans la bouche de réaction du comparateur 84 se trouvent montées la résistance 86 et la diode 87 afin d'assurer une certaine hystérésis au seuil de sécurité de la vitesse d'entrée limite évitant ainsi tout instabilité du système. La valeur limite de la vitesse d'entrée est représentée par la tension de référence appliquée à l'entrée négative du comparateur 84 et sa valeur est déterminée par les résistances 88 et 89 ainsi que par une tension fixe de référence Ua..

Une porte logique 90 réalisant la fonction ET reçoit sur ses différentes entrées : le signal H de sortie du comparateur 76 fournissant l'ordre de pontage ; à travers l'amplificateur inverseur 91 le signal de sortie 34a du bloc de temporisation 34 fournissant un ordre de dépontage ; le signal 19a correspondant au passage de la marche arrière ; et le signal de sortie K du comparateur 84 du circuit de sécurité 83. La sortie J de la porte ET 90 ne se trouve donc à l'état haut que si toutes ses entéres le sont également. Dans ces conditions, la sortie J sera à l'état haut si toutes les conditions suivantes se trouvent simultanément remplies :

— le contact de marche arrière du véhicule n'est pas actionné ce qui correspond à une information sur la connexion 19a à l'état haut ;

— aucun ordre de dépontage n'est présent ce qui correspond au niveau bas du signal $d$ sur la borne 34a et au niveau haut à la sortie de l'inverseur 91 ;

— la vitesse d'entrée du convertisseur ou vitesse du moteur VM est supérieure à la vitesse de sécurité définie par le circuit 83 ;

— le rapport des vitesses $V_T/V_M$ a atteint la valeur $i$ correspondant au point de couplage du convertisseur.

Le signal J constituant l'ordre de pontage alimente l'étage de puissance 37 dont la structure est classique. Le signal J est en effet appliqué à l'entrée d'un amplificateur inverseur 92 qui alimente par l'intermédiaire de la résistance 93 la base d'un transistor de puissance PNP 94 comportant une résistance de charge 95 et relié par son émetteur à la tension d'alimentation du circuit et par son collecteur à la liaison 16c d'alimentation de la bobine de l'électro-aimant du traducteur électrohydraulique 14 avec interposition de la diode de protection 96 reliée à la masse.

On notera que dans l'exemple illustré, le traducteur électrohydraulique 14 présente une structure telle qu'en l'absence d'excitation de la bobine de commande de l'électrovanne il laisse passer le fluide hydraulique. Comme on l'a vu à l'étude de la fig. 3 ce débit important à travers le traducteur 14 entraîne le desserrage du piston de commande 28, le convertisseur se trouvant en phase de conversion.

Au contraire, lorsqu'un signal alimente la bobine de commande de l'électrovanne, le traducteur empêche tout passage du fluide hydraulique qui ne peut s'écouler que par la restriction 24 (fig. 3) entraînant de ce fait le pontage du convertisseur. L'électrovanne du traducteur 14 peut être réalisée au moyen d'une bille en matériau magnétique soumise à l'action d'une bobine d'électroaimant et susceptible de se déplacer dans un logement afin d'obturer sélectivement le passage du fluide hydraulique.

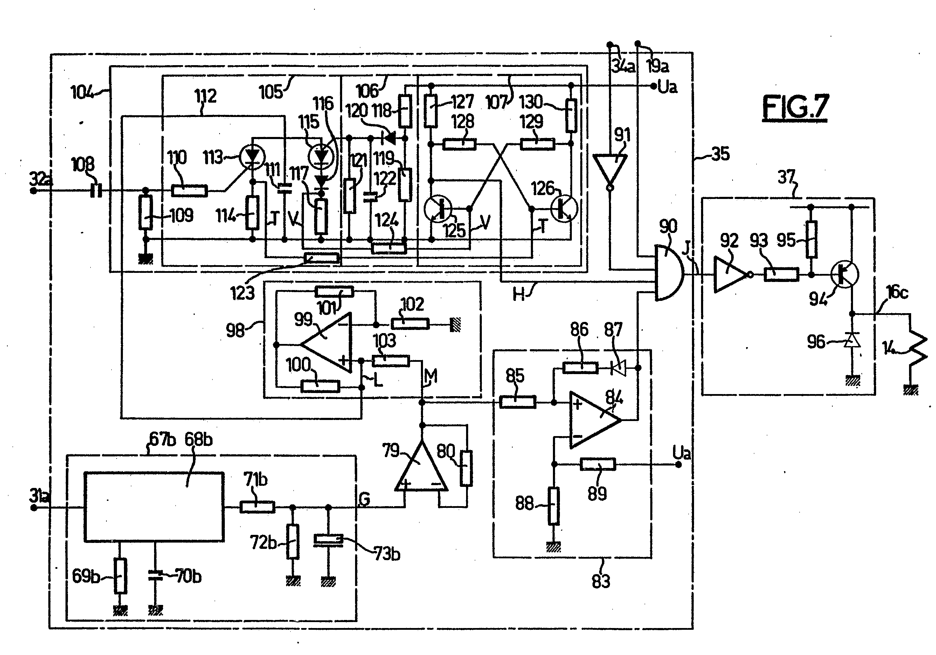

Dans la variante de réalisation représentée sur la fig. 7, les éléments identiques portent les mêmes références. Dans ce mode de réalisation du bloc de comparaison 35, le traitement du signal 31a correspondant à la vitesse $V_M$ de l'arbre d'entrée du convertisseur est fait de la même manière par le convertisseur fréquence/tension 67b, le signal de sortie G de ce convertisseur étant également appliqué à l'entrée de l'amplificateur 79 formant tampon. On retrouve également le circuit de sécurité 83 ainsi que la porte logique ET 90 qui délivre à sa sortie le signal J de pontage appliqué au même étage de puissance 37. Dans cette variante cependant, et afin d'augmenter la vitesse de commande, le traitement du signal représentant la vitesse $V_T$ de l'arbre de sortie apparaissant sur la borne 32a est fait de manière différente.

Les moyens de traitement de ce signal comprennent un générateur de courant 98 et un périodemètre 104. Le générateur de courant 98 est réalisé au moyen d'un amplificateur opérationnel 99 coopérant avec la résistance 100 de la boucle de réaction, la résistance 101 de la boucle de contreréaction et la résistance 102 montée entre l'entrée négative et la masse du montage. La tension de sortie M de l'amplificateur 79 est appliquée par la résistance 103 à l'entrée positive de l'amplificateur 99.

Le courant présent sur la borne L reliée à l'entrée positive de l'amplificateur 99 est donc proprotionnel à la tension M c'est-à-dire à la vitesse de l'arbre d'entrée $V_M$. Ce courant est appliqué à l'entrée du périodemètre 104.

Le périodemètre 104 a déjà fait l'objet d'une description partielle dans le brevet français 1 457 550 intitulé « Gouverneur de commande en fonction de la fréquence et d'au moins un paramètre auxiliaire » auquel on pourra se référer pour plus de précision. Le périodemètre 104 comprend un générateur/comparateur de temps 105, un générateur de seuil 106 et une bascule bistable 107.

Le générateur/comparateur de temps 105 compare la période du signal $V_T$ correspondant à la vitesse de l'arbre de sortie apparaissant sur la borne 32a après différentiation par le condensateur 108 et les résistances 109 et 110, avec la durée d'un signal autogénéré par le bloc 105, signal qui est proportionnel à la valeur de la tension fournie par le générateur de seuil 106 et inversement proportionnel à l'intensité L fournie par le générateur de courant 98.

Le générateur/comparateur de temps 105 est constitué par le condensateur 111 qui se charge par la liaison 112 recevant le courant L issu du générateur de courant 98. Le condensateur 111 peut se décharger rapidement par deux voies différentes :

— la première voie se compose du thyristor 113 à fort courant de maintien qui décharge impérativement le condensateur 111 à travers la résistance 114 et la masse du montage chaque fois que le circuit dérivateur envoie par la résistance 110 une impulsion de courte durée sur la gâchette du transistor 113.

— la deuxième voie se compose du transistor unijonction programmable 115 à faible courant de maintien qui décharge le condensateur 111 à travers la diode 116, la résistance 117 et la masse du montage chaque fois que la tension de charge du condensateur 111 atteint la tension d'amorçage définie par les éléments du générateur de sueil 106 qui fixe le potentiel de la porte du transistor unijonction 115.

Le générateur de seuil 106 comprend un diviseur de tension constitué par les résistances 118 et 119 dont le point intermédiaire alimente, par la diode 120 assurant la compensation en température du seuil d'amorçage, la porte du transistor unijonction 115 qui retourne à la masse par la résistance 121 et le condensateur 122 qui permet de supprimer les variations brèves de la tension d'amorçage dues à la présence accidentelle d'impulsions parasites sur la porte du transistor unijonction 115.

Suivant que la période du signal apparaissant sur la borne d'entrée 32a permet ou non à la tension de charge du condensateur 111 d'atteindre le seuil d'amorçage du transistor unijonction 115, une impulsion positive, brève et de forte amplitude apparaît sur l'une ou l'autre des résistances 114 et 117 et est envoyée sur l'une ou l'autre des voies de commande T ou V de la bascule bistable 107 par l'intermédiaire des résistances 123 et 124.

La bascule 107, de structure classique, est constituée des deux transistors NPN 125 et 126 et des résistances 127, 128, 129 et 130. La bascule bistable 107 garde en mémoire le résultat de la comparaison jusqu'à la période suivante. Le branchement de la bascule bistable 107 est tel que le transistor 126 reste bloqué et le transistor 125 saturé quand la période du signal 32a correspondant à la vitesse de l'arbre de sortie du convertisseur est supérieure à la durée du signal de référence obtenu quand la tension de charge du condensateur 111 atteint le seuil d'amorçage du transistor unijonction 115. Une telle configuration entraîne pour la sortie H de la bascule bistable 107 un niveau bas. Dans le cas contraire cette sortie reste au niveau haut.

Le signal de sortie J de la porte logique 90 est appliqué, comme dans la variante de la fig. 6 sur l'interface de puissance 37 qui permet la commande du traducteur électrohydraulique 14.

On obtient finalement un dispositif électronique de commande grâce auquel le pontage du convertisseur de la transmission peut être fait sur tous les rapports de marche avant de la transmission. Par ailleurs, le dispositif électronique comprend des moyens de sécurité interdisant le pontage soit lorsque la transmission se trouve sur le rapport de marche arrière, soit lorsque la vitesse du moteur est inférieure à un certain seuil pour lequel le pontage entraînerait l'arrêt du moteur.

Le dispositif électronique de l'invention permet de supprimer le pontage et de réaliser une temporisation à chaque passage montant et descendant des rapports de transmission permettant ainsi un passage sans choc des différents rapports de transmission. Par ailleurs, le pontage est fait selon la présente invention en fonction du rapport entre la vitesse de sortie et la vitesse d'entrée du convertisseur c'est-à-dire en tenant compte des paramètres les plus caractéristiques du fonctionnement réel du convertisseur.

Enfin, le dispositif de l'invention est conçu de façon qu'en cas de défaillance de l'un ou l'autre des capteurs de vitesse, le convertisseur se retrouve en phase de conversion tout pontage étant interdit. En effet, si le capteur de la vitesse de l'arbre de sortie ne fournit aucune indication, le rapport de vitesse qui commande le dispositif de l'invention est nul de sorte que le pontage n'est pas possible. Si au contraire, le capteur de la vitesse de rotation de l'arbre d'entrée est défectueux, c'est par le circuit de sécurité référencé 83 que tout pontage se trouve interdit.

## Revendications

1. Dispositif électronique de commande de pontage permettant le couplage sans glissement entre l'arbre d'entrée (2) et l'arbre de sortie (7) d'un convertisseur de couple hydrodynamique (3) faisant partie d'une transmission automatique (8) à plusieurs rapports de transmission, comprenant un bloc de comparaison des vitesses (35) respectives de l'arbre d'entrée ($V_M$) et de l'arbre de sortie ($V_T$) par rapport à une valeur déterminée afin de fournir un ordre de commande de pontage caractérisé par le fait qu'il comprend en outre un bloc de temporisation (34) supprimant le pontage pendant le passage d'un rapport de transmission _

à un autre rapport et transmettant avec retard l'ordre de commande dudit passage à la transmission.

2. Dispositif électronique de commande selon la revendication 1, caractérisé par le fait que le bloc de temporisation (34) comprend pour chaque signal de passage de rapport de transmission un dispositif (38) générant une impulsion de durée déterminée à chaque changement d'état du signal de passage et un moyen de mémorisation (52a, 52b) recevant le signal de passage et ne le transmettant qu'après l'expiration de ladite durée déterminée.

3. Dispositif électronique de commande selon les revendications 1 ou 2, caractérisé par le fait que le bloc de temporisation (34) comprend pour chaque signal de passage de rapport de transmission un générateur d'impulsion (38) commandé par chaque changement d'état et associé à une bascule monostable (53) fournissant des impulsions dont la durée correspond à la durée du passage d'un rapport de transmission.

4. Dispositif électronique de commande selon l'une quelconque des revendications précédentes, caractérisé par le fait que le bloc de comparaison (35) comprend pour chacun des signaux représentant respectivement la vitesse de l'arbre d'entrée ($V_M$) et la vitesse de l'arbre de sortie ($V_T$), un convertisseur fréquence/tension (67a, 67b) et un comparateur (76) recevant l'intégralité de l'une des tensions obtenue et une fraction de l'autre tension.

5. Dispositif électronique de commande selon l'une quelconque des revendications 1 à 3, caractérisé par le fait que le bloc de comparaison (35) comprend pour le signal représentant la vitesse de l'arbre d'entrée ($V_M$) un convertisseur fréquence/tension (67b) et pour le signal représentant la vitesse de l'arbre de sortie ($V_T$) un périodemètre (104) recevant en outre un courant issu d'un générateur de courant (98) piloté par le signal de sortie du convertisseur fréquence/tension (67b) précité.

6. Dispositif électronique de commande selon les revendications 4 ou 5, caractérisé par le fait que chaque convertisseur fréquence/tension (67a, 67b) comprend une bascule monostable (68a, 68b) associée à un circuit intégrateur (71a, 72a, 73a ; 71b, 72b, 73b).

7. Dispositif électronique de commande selon l'une quelconque des revendications 4 à 6, caractérisé par le fait que le bloc de comparaison (35) comprend en outre un circuit de sécurité (83) recevant le signal de tension correspondant à la vitesse de l'arbre d'entrée afin d'interdire le pontage au-dessous d'une limite inférieure de la vitesse de l'arbre d'entrée.

8. Dispositif électronique de commande selon l'une quelconque des revendications 4 à 7, caractérisé par le fait que le bloc de comparaison (35) comprend en outre une porte ET logique (90) fournissant le signal de sortie du dispositif électronique et recevant les impulsions de durée déterminée issues, après inversion, du bloc de temporisation (34), le signal du périodemètre (104) ou du comparateur (76) des vitesses de l'arbre d'entrée et de l'arbre de sortie, le signal de sortie du circuit de sécurité (83) et éventuellement un signal correspondant à l'état de marche arrière de la transmission.

9. Dispositif électronique de commande selon l'une quelconque des revendications 5 à 8, caractérisé par le fait que le périodemètre (104) comprend un générateur/comparateur de temps (105) qui compare la période du signal représentant la vitesse de l'arbre de sortie à la durée d'un signal autogénéré qui est proportionnel à la valeur de la tension donnée par un générateur de seuil (106) et inversement proportionnelle à l'intensité fournie par un générateur de courant (98) alimenté par le signal de sortie du convertisseur fréquence/tension (67b) traitant le signal représentant la vitesse de l'arbre d'entrée.

10. Procédé de pontage d'un convertisseur de couple hydrodynamique faisant partie d'une transmission automatique à plusieurs rapports de transmission dans lequel le pontage est commandé pour tous les rapports de la transmission, dès que le rapport de la vitesse de l'arbre de sortie du convertisseur à la vitesse de l'arbre d'entrée ($V_T/V_M$) est supérieur à une valeur limite correspondant sensiblement au point de couplage du convertisseur, caractérisé par le fait que, pour chaque passage d'un rapport de transmission à un autre rapport, le pontage est supprimé pendant une durée déterminée, l'ordre de passage du rapport de transmission n'étant pas fourni à la transmission automatique avant l'expiration de ladite durée déterminée.

**Claims**

1. Electronic lock-up control device providing for slipless coupling between the input shaft (2) and the output shaft (7) of a hydrodynamic torque converter (3) forming part of an automatic transmission (8) having several transmission ratios, comprising a comparison unit (35) comparing the respective speeds of the input shaft ($V_M$) and of the output shaft ($V_T$) with a set value in order to supply a lock-up control command, characterized in that it also comprises a timer unit (34) suppressing the lock-up during the change from one transmission ratio to another ratio and transmitting the command controlling the said change to the transmission with a time delay.

2. Electronic control device according to claim 1, characterized in that the timer unit (34) comprises for each transmission ratio change signal a device (38) generating a pulse of preset duration at each change in state of the change signal, and memorizing means (52a, 52b) receiving the change signal and only transmitting it after the said preset duration has expired.

3. Electronic control device according to claims 1 or 2, characterized in that the timer unit (34) comprises for each transmission ratio change signal a pulse generator (38) controlled by each change in state and combined with a monostable multivibrator (53) supplying pulses having a duration which corresponds to the duration of a transmission ratio change.

4. The electronic control device according to any of the preceding claims, characterized in that the comparison unit (35) comprises, for each of the signals respectively representing the input shaft speed ($V_M$) and the output shaft speed ($V_T$), a frequency/voltage converter (67a, 67b) and a comparator (76) receiving the whole of one of the voltages obtained and a portion of the other voltage.

5. The electronic control device according to any of claims 1 to 3, characterized in that the comparison unit (35) comprises, for the signal representing the input shaft speed ($V_M$), a frequency/voltage converter (67b) and, for the signal representing the output shaft speed ($V_T$), a period meter (104) which also receives a current from a current generator (98) driven by the output signal from the above-mentioned frequency/voltage converter (67).

6. The electronic control device according to claims 4 or 5, characterized in that each frequency/voltage converter (67a, 67b) comprises a monostable multivibrator (68a, 68b) combined with an integrating circuit (71a, 72a, 73a ; 71b, 72b, 73b).

7. The electronic control device according to any of claims 4 to 6, characterized in that the comparison unit (35) also comprises a safety circuit (83) receiving the voltage signal corresponding to the input shaft speed so as to prohibit lock-up below a lower limit of the input shaft speed.

8. The electronic control device according to any of claims 4 to 7, characterized in that the comparison unit (35) also comprises a logic AND gate (90) supplying the output signal from the electronic device and receiving the pulses of preset duration arriving, after inversion, from the timer unit (34), the signal from the period meter (104) or from the comparator (76) of the speeds of the input shaft and of the output shaft, the output signal from the safety circuit (83) and, eventually, a signal corresponding to the reverse drive condition of the transmission.

9. The electronic control device according to any of claims 5 to 8, characterized in that the period meter (104) comprises a time comparator/generator (105) which compares the period of the signal representing the output shaft speed with the duration of a self-generated signal which is proportional to the value of the voltage given by a threshold generator (106) and inversely proportional to the current supplied by a current generator (98) fed by the output signal from the frequency/voltage converter (67b) processing the signal representing the input shaft speed.

10. Method of locking up a hydrodynamic torque converter forming part of an automatic transmission with several transmission ratios in which lock-up is controlled for all the ratios of the transmission as soon as the ratio of the converter output shaft speed to the input shaft speed ($V_T/V_M$) exceeds a limiting value corresponding roughly with the converter coupling point, characterized in that for each change from one transmission ratio to another lock-up is suppressed for a preset duration, with the transmission ratio change command being supplied to the automatic transmission only after the said preset duration has expired.

## Ansprüche

1. Elektronisches Gerät zur Steuerung einer Überbrückung, die das schlupffreie Kuppeln zwischen der Eingangswelle (2) und der Ausgangswelle (7) eines hydrodynamischen Drehmomentwandlers (3) ermöglicht, der Teil eines Automatikgetriebes (8) mit mehreren Gängen ist und einen Drehzahlvergleicherblock (35) für die jeweiligen Drehzahlen der Eingangswelle ($V_M$) bzw. der Ausgangswelle ($V_T$) mit einem vorbestimmten Wert zwecks Lieferung eines Überbrückungssteuerbefehls enthält, dadurch gekennzeichnet, dass er ferner einen Verzögerungsblock (34) enthält, der die Überbrückung während des Schaltens aus einem Gang in einen anderen unwirksam macht und den Steuerbefehl für den genannten Schaltvorgang mit Verzögerung auf das Getriebe überträgt.

2. Elektronisches Steuergerät gemäss Anspruch 1, dadurch gekennzeichnet, dass der Verzögerungsblock (34) für jedes Gangschaltsignal eine Vorrichtung (38), die bei jeder Änderung des Gangschaltsignalzustands einen Impuls von vorbestimmter Länge erzeugt, sowie ein Speichermittel (52a, 52b) enthält, das das Gangschaltsignal speichert und erst nach Ablauf eines vorbestimmten Zeitraums weitergibt.

3. Elektronisches Steuergerät gemäss den Ansprüchen 1 oder 2, dadurch gekennzeichnet, dass der Verzögerungsblock (34) für jedes Gangschaltsignal einen Impulsgenerator (38) enthält, der von jeder Zustandänderung gesteuert wird und zusammen mit einer monostabilen Kippschaltung (53) die Impulse liefert, deren Dauer der Dauer des Gangschaltvorgangs entspricht.

4. Elektronisches Steuergerät gemäss einem beliebigen der obigen Ansprüche, dadurch gekennzeichnet, dass der Vergleicherblock (35) für jedes der Signale, die die Drehzahl der Eingangswelle (VM) bzw. der Ausgangswelle (VT) darstellen, einen Frequenz/Spannungswandler und einen Vergleicher (76) umfasst, der die eine erzeugte Spannung (67a, 67b) ganz und die andere Spannung nur zum Teil empfängt.

5. Elektronisches Steuergerät gemäss einem beliebigen der Ansprüche 1 bis 3, dadurch gekennzeichnet, dass der Vergleicherblock (35) für das Signal, das der Drehzahl der Eingangswelle ($V_M$) entspricht, einen Frequenz/Spannungswandler (67b), und für das Signal, das der Drehzahl der Ausgangswelle entspricht, einen Periodenmesser (105) umfasst, der ferner einen aus einem Stromgenerator (98) ausgehenden Strom empfängt, der vom Ausgangssignal des obigen Frequenz/Spannungswandlers (67b) gesteuert wird.

6. Elektronisches Steuergerät gemäss den Ansprüchen 4 oder 5, dadurch gekennzeichnet, dass jeder Frequenz/Spannungswandler (67a, 67b) eine monostabile Kippschaltung (68a, 68b) zusammen mit einem Integrierkreis (71a, 72a, 73a ; 71b, 72b, 73b) enthält.

7. Elektronisches Steuergerät gemäss einem beliebigen der Ansprüche 4 bis 6, dadurch gekennzeichnet, dass der Vergleicherblock (35) ferner einen Sicherheitsschaltkreis (83) enthält, der das Spannungssignal entsprechend der Drehzahl der Eingangswelle aufnimmt um die Überbrückung unterhalb der Untergrenze der Drehzahl der Eingangswelle unwirksam zu machen.

8. Elektronisches Steuergerät gemäss einem beliebigen der Ansprüche 4 bis 7, dadurch gekennzeichnet, dass der Vergleicherblock (35) ferner einen logischen UND-Ausgang (90) enthält, der das Ausgangssignal des elektronischen Geräts liefert und die vom Verzögerungsblock (34), nach Umwandlung, ausgehenden Impulse vorgegebener Länge, das Signal des Periodenmessers (104) bzw. des Drehzahlvergleichers (76) für die Eingangswelle und die Ausgangswelle, das Ausgangssignal des Sicherheitsschaltkreises (83) und ggf. ein Signal, das den Zustand des Rückwärtsgangs des Getriebes entspricht, empfängt.

9. Elektronisches Steuergerät gemäss einem beliebigen der Ansprüche 5 bis 8, dadurch gekennzeichnet, dass der Periodenmesser (104) einen Zeitgenerator/Vergleicher (105) enthält, der die Periode des Signals, das der Drehzahl der Ausgangswelle entspricht, mit der Dauer eines selbstwerzeugten Signals vergleicht, das porportional zum Wert der von einem Schwellengenerator (106) erzeugten Spannung und umgekehrt proportional der Stärke eines von einem Stromgenerator (98) gelieferten Signals ist, der vom Ausgangssignal des Frequenz/Spannungswandlers (67b) gespeist wird, der das Signal, das der Drehzahl der Eingangswelle entspricht, verarbeitet.

10. Überbrückungsmethode für einen hydrodynamischen Drehmomentwandler als Teil eines Automatikgetriebes mit mehreren Gängen, bei dem die Überbrückung für alle Gänge gesteuert wird sobald das Verhältnis der Drehzahl der Ausgangswelle des Wandlers zur Drehzahl der Eingangswelle ($V_T/V_M$) einen Grenzwert überschreitet, der merklich dem Kupplungspunkt des Wandler entspricht, dadurch gekennzeichnet, dass für jeden Schaltvorgang aus einem Gang in einen anderen die Überbrückung während einer vorgegebenen Zeitspanne ausgesetzt wird, wobei der Befehl zum Schalten der Gänge erst nach Ablauf dieser genannten vorbestimmten Zeitspanne an das Automatikgetriebe geliefert wird.

# FIG.1

FIG.2

FIG.3

FIG.4

## FIG.5

# FIG.6

0 021 258

FIG.7